# EUROPEAN PATENT APPLICATION

(11) **EP 4 604 421 A1**
(43) Date of publication of application: **20.08.2025**
(21) Application number: 24158282.4
(22) Date of filing: 19.02.2024
(51) Int. Cl.: H04B 10/116, H04B 10/43, H05B 47/195

(54) **DATA TRANSMISSION DEVICE, EMERGENCY LIGHTING DEVICE AND SYSTEM, AND METHOD FOR TRANSFERRING DATA BETWEEN THE DATA TRANSMISSION DEVICE AND THE EMERGENCY LIGHTING DEVICE**

(71) Applicant: Tridonic GmbH & Co. KG, 6851 Dornbirn (AT)
(72) Inventor: Wilson, Ian, 6851 Dornbirn (AT)
(74) Representative: Beder, Jens

(57) **Abstract**

The proposed system comprises a data transmission device (6) and an emergency device (2). According to the invention, in the emergency device (2), an indicator LED (5) is switched into its reverse mode, in which incident light can be measured. Using a light source of the data transmission device (6), modulated light is emitted which is received in the indicator LED (5) operated as a photodiode. The incident light is then analysed in order to retrieve the transmitted data. Thus, by modulating emitted light from the light source (12), it is possible to transfer data from the data transmission device (6) to an emergency device (2).

## Description

The invention regards a data transmission device and an emergency lighting device and system comprising the data transmission device and the emergency lighting device, and also a method for transferring data from the data transmission device to the emergency lighting device, for example, for enabling updating firmware executed in the emergency lighting device for operating the device.

There are various types of emergency lighting devices on the market, for example emergency lighting devices providing illumination in case of mains failure or emergency signs for indicating escape path by displaying direction. These devices are usually operated using a microcontroller executing firmware stored in the emergency lighting device. Errors and failures of the emergency lighting devices can be reduced or avoided by updating the firmware that runs on the microcontroller. Thus, it is desirable that new firmware can be uploaded into the system. However, not only updating firmware is desired, but also adjusting parameters that are used for the operation of the emergency lighting devices. Such parameters may control for example a duration in case of an emergency lighting device.

In order to enable such transfer of data between an external device (external to the emergency lighting device) and the emergency lighting device, it is known in the art to connect the emergency lighting device to a bus system or provide a dedicated interface, for example Bluetooth or WLAN. Unfortunately, such additional hardware is quite expensive and, thus, respective circuitry and hardware components cannot be used in case of low-budget devices. Nevertheless, in order to ensure customer satisfaction also with devices in the low-budget market, it is required to update microcontrollers installed in such low-budget emergency devices. Currently, an operator needs open the luminaire, remove the driver and open the driver in order to enable uploading the data to be transmitted, which is then installed as a new firmware version for future operation of the emergency lighting device. After the firmware is uploaded, the device and the luminaire need to be reassembled.

Even in case that NFC modules are used for data transfer between an upload device and the emergency lighting device, it is still necessary to access the emergency lighting device: usually the NFC modules are arranged inside the emergency lighting device and it is only possible to bring the upload device in such close proximity to the NFC module to enable data transfer, when an operator opens the emergency device and establish a close relation between the corresponding NFC modules of the updating device and the driver of the emergency lighting device. The costs arising from such maintenance measures deteriorates the cost advantage of the low price of the emergency lighting device.

Thus, it is desired to enable a data transfer to an emergency lighting device with low additional hardware requirements which does not cause a huge workload for the operator in case that data transfer to the emergency lighting device is required, for example for updating the firmware. This problem is solved by the present invention as defined in the independent claims.

According to the invention, data transfer between an inventive data transmission device and the emergency lighting device is achieved by visible light communication between the data transmission device and the emergency device. In order to avoid that additional hardware is required in the emergency lighting device, an indicator LED, which is provided in emergency lighting device in order to indicate charging of a battery of a self-contained emergency lighting device is operated in the reverse mode. Data to be transmitted from the data transmission device to the emergency device is transferred from the data transmission device by using visible light communication. The data is encoded in a modulated light signal generated by a light source of the data transmission device. This modulated light is received by the emergency lighting device using the indicator LED being operated in reverse mode and, thus, acting as the photodiode.

The data transmission device for transmitting data by emitting modulated light comprises a light source as mentioned above producing modulated light for data transmission. The light source is connected to a light emitting surface, which emits the modulated light. A microcontroller controls emission of light by the light source according to the data to be transmitted. Modulation of the light may, in a simple manner, be caused by switching on and off light source. Light emission of the light source is controlled by a microcontroller of the data transmission device. The microcontroller is enclosed in a main body of the data transmission device to which a rod is attached for supporting the light-emitting surface at an end distal to the main body. The rod supports at least the light emitting surface at an end distal to the main body. The light source might also be arranged in the main body and connected to the light-emitting surface using a light guide. Preferably, the light source may directly provide the light-emitting surface, for example in form of an LED, which is arranged at the end distal to the main body on the rod. The data transmission unit is a handheld device that allows an operator holding the main body to position the distal end of the rod in close proximity to the emergency lighting device to which data shall be transferred. Light emitted by the light-emitting surface then illuminates the indicator LED of the emergency lighting device and enables data transmission by VLC (visible light communication).

The emergency lighting device comprising the indicator LED comprises a microcontroller controlling operation of the indicator LED and circuitry allowing to switch operation of the indicator LED from a light emitting mode to a reverse operation mode. During normal operation, the circuitry controls light emission of the indicator LED in the light-emitting mode, in which, for example in case of a self-contained emergency lighting device, charging of the internal battery of the self-contained emergency lighting device is indicated. Obviously, this is only an example for such an indicator LED, because other functions of an emergency lighting device may be indicated using such LED as well. Typically, the indicator LED is a green indicator LED.

The emergency lighting device further comprises measurement circuitry for measuring incident light in the reverse operation mode to generate a received signal. In case that the emergency lighting device operates the indicator LED in the reverse mode, it is therefore possible to transfer information using incident light which falls onto the surface of the indicator LED acting as a photodiode. The incident light is emitted by the light-emitting surface of the data transmission device as briefly explained above. The microcontroller of the emergency lighting device is configured to demodulate the received signal to retrieve the data, according to which the emitted light was modulated. After restoring the transmitted data, the transmitted data is stored in a memory or supplied to a further data processing unit for directly processing the transmitted data. The data that is transmitted to the emergency lighting device may be a new firmware for future use in the emergency lighting device, new parameters that are used with an already installed firmware, an indication of a new battery chemistry in case of a self-contained emergency device that requires an adapted charging strategy, or the like.

With the present invention, it is possible to use components which are already present in currently available low-budget emergency lighting devices, namely an indicator LED, for receiving data from an external device. The system can be included in an emergency lighting device at low costs. It is to be noted that the indicator LED of an emergency lighting device is always arranged at a position on the emergency device (for example emergency luminaire) that is visible, because it must be perceivable by an operator. Thus, even in case that the emergency lighting device is installed on a ceiling or on a wall, it is clear that such indicator LED is easily accessible from external and light that is generated by the data transmission device can be emitted such that it falls onto the surface of the indicator LED of the emergency lighting device. Thus, the only redesign that is necessary in such new and inventive emergency lighting devices is enhancing the drive circuitry switching on and off the indicator LED to enable operation of the indicator LED in the reverse mode.

With the present invention it is easily possible that an operator stands close to the emergency device, holds the data transmission device in a position that the light-emitting surface is in close proximity to the indicator LED, which is operated in the reverse mode. Thus, light emitted from the light-emitting surface will cause a measurable voltage generated in the indicator LED operated in the reverse mode. Thus, modulated light emitted from the light-emitting surface enables data transfer from the data transmission device to the emergency lighting device.

Advantageous embodiments and aspects of the present invention are defined in the dependent claims.

According to a preferred embodiment and in order to improve data transmission between the data transmission device and the emergency lighting device by reducing noise that is caused by ambient light, the rod supporting at least the light emitting surface further supports a light shade which at least partially surrounds the light emitting surface. The light shade may for example have a cup-shape large enough to enclose the emergency device in its entirety together with the light-emitting surface thereby shading light that might be produced by external light sources. According to another advantageous embodiment, the light shade is adapted to the type of emergency device to which the data shall be transferred such that the light shade directly covers the indicator light and establish the closed space only including the indicator LED and the light-emitting surface (which may be part of the light source of the data transmission device). The latter embodiment is even more advantageous, because in case of an emergency lighting device the light emitted by the emergency lighting device itself does not fall on the indicator LED operated in the reverse mode. Consequently, the indicator LED operating in the reverse mode as a photodiode only responds to incident light from the light source of the data transmission device, which is light emitted by the light-emitting surface.

In order to enable a simple structure of the data transmission device, it is advantageous to provide the light emitting surface directly on an LED as a light source and arranged the LED on the distal end of the rod inside the cup-shaped light shade.

The rod may be a telescopic rod. Using a telescopic rod is specifically advantageous in combination with the light-emitting source being arranged at the distal end of the rod. In that case, only wiring in order to supply the light source with electrical power is required to enable emitting modulated light by the light source and the light-emitting surface. The telescopic rod allows to reach even distant emergency lighting devices, for example mounted on a ceiling of high ceilings, for example in a reception hall in a hotel or the like. Since the telescopic rod is adjustable, the very same data transmission device can be used in different situations in a convenient manner for the operator.

The microcontroller included in the main body of the data transmission device is configured to convert and encode the data to be transmitted into a signal controlling light emission of the data transmission device. The signal serves as a control signal for a switch arranged in the current path supplying the light source with electrical power. Accordingly, the light source is switched on and off in accordance with the data to be transmitted. The microcontroller is thus configured to cause the light source to produce the modulated light based on this signal.

Preferably, the light source is an LED, which is adjusted to the wavelength of the indicator LED of the emergency device. Typically, the emergency light devices use green LEDs and, consequently, the light source of the data transmission device can be a green LED. In case that the emergency lighting wise provides an indicator LED having a different color, the light source of the transmission device shall be adapted to emit lights of the respective wavelength. It is also possible to arrange a plurality of light sources in the data transmission device that can be selected by the operator. In such a case it is possible to use a single data transmission device for a plurality of different emergency lighting devices having different types of LEDs as indicator LED.

Even more advantageously, the driver is configured to be able to operate the LED in a light emitting mode for transmitting data but also in a reverse mode for receiving data. In that case, it is also possible to establish a back channel for receiving information from the emergency lighting device. In such a case, the emergency lighting device can send information to the data transmission device by emitting modulated light by the indicator LED of the emergency lighting device. At the same time, the data transmission device operates its LED in the reverse mode to produce, by the LED operated as a photodiode, a signal corresponding to the measured intensity of the modulated light emitted by the indicator LED. The internal data processing is then similar to retrieving the transmitted data in the emergency driver as it will be explained hereinafter in greater detail. Alternatively, it is possible to provide a dedicated receiver in the transmission device.

The emergency lighting device according to the present invention comprises the indicator LED as explained above, a microcontroller controlling operation of the indicator LED, circuitry allowing to switch operation of the indicator LED from a light emitting mode to a reverse operation mode. Further, the emergency lighting device comprises measurement circuitry for measuring incident light in the reverse operation mode to generate a received signal, corresponding to the modulated light received by the indicator LED operated as a photodiode. The received signal is provided to the microcontroller of the emergency lighting device configured to demodulate the received signal for retrieving the transmitted data. Once the data used for modulating the emitted light by the data transmission device has been retrieved, this data can be stored in a memory for later processing or directly supplied to units or modules in the emergency device for further processing.

Preferably, the data is stored in a separate memory and verification of the data is performed before it is used for further processing, for example installing an app loaded new firmware version. Specifically, in case that an update of the firmware to run the emergency device is made by uploading data using the inventive system, such procedure avoids that corrupted data or misinterpreted data is used for the operation of the emergency device.

Preferably, the emergency lighting device is a self contained emergency lighting device, in which an energy storage is included, that may be a battery or a rechargeable battery. Such devices regularly are able to monitor mains for mains failure or, to be more general, mains shut off.

Preferably, the microcontroller is configured to cause operation of the indicator LED in the reverse mode in response to detecting mains shut off. Controlling the indicator LED to emit light is usually used in order to indicate charging of the battery or confirm successful testing. However, the indicator LED is never used herein emergency operation mode of the emergency lighting device in order to signal the system status to an operator or other people in the environment of the emergency device. So every time the emergency lighting device is in the emergency mode, it is possible to use the capability of the indicator LED to operate as a photodiode for data reception from the data transmission device. So the switchover from the regular operation to the emergency mode of the emergency lighting device is a proper trigger for switching the operation mode of the indicator LED to the reverse mode operation.

Advantageously, the microcontroller is configured to compare a mains shut off pattern (specific time sequence of mains shut off and re-powering the emergency lighting device) to a reference shut off pattern defined as a trigger condition. Although, as stated above, it is possible to switch the indicator LED in the reverse operation mode in any case that the mains is shut off, it provides additional advantages if a pattern of shut off sequence of mains is stored in the emergency device and, upon detection of the mains shut off it is determined whether mains shut off is a single event, which would indicate a mains failure, or a sequence. Identifying such pattern could then be used to trigger not only switching the operation of the indicator LED into the reverse mode but a certain operation mode of the emergency device. For example, the emergency lighting device might be switched into a rest mode. In the rest mode, there is no light emission from the emergency lighting device, because operating the emergency lighting devices light source from the battery is suppressed. This means, that not only the indicator LED is operated in the reverse mode but also the light sources of the emergency lighting device are switched off. Doing so further reduces the risk of misinterpretations of information transmitted using visible light communication from the data transmission device to the emergency device.

Switching the emergency lighting device into the rest mode is specifically advantageous in case that the data transmission device comprises the cup-shaped light shade enclosing the entire emergency lighting device.

Alternatively, switching the emergency lighting device into the rest mode can be done in response to detecting a respective command received in the modulated light after detecting mains shut off. As mentioned above, mains shut off causes the indicator LED to be operated in the reverse mode. Thus, from the moment mains shut off is detected on, it is possible to transmit information from the data transmission device to the emergency lighting device. This capability can now be used in order to send a switch command to the emergency lighting device which is independent from the data which shall be transmitted, for example to update the driver firmware or the like in the emergency lighting device. So before the main data transfer is started, the data transmission device can indicate that an upload of data will follow causing the emergency lighting device to switch to the rest mode which then improves the quality of the data transfers explained above. It is to be noted that this is only an example in any kind of command may be transmitted as soon as the indicator LED has been switched into the reverse mode.

According to the invention, a method is provided for transferring data from a data transmission device to an emergency lighting device. In order to enable such data transfer without using a bus system or dedicated communication interface as in the prior art, in a first step, the emergency lighting device's indicator LED is switched from its regular operation mode into a reverse operation mode. In the reverse operation mode, the indicator LED is operated like a photodiodes and the signal generated by the indicator LED operated as a photodiode allows to use modulated incident light in order to send information from external to the emergency lighting device.

The modulated light is generated in the data transmission device by causing the light source to produce modulated light in accordance with data to be transmitted. The light is then emitted by the light-emitting surface of the data transmission device and illuminates the indicator LED of the emergency lighting device. The incident light received by the indicator LED is measured by the emergency lighting device and the result of the measurement is a signal containing the information which is transmitted from the data transmission device to the emergency lighting device. This information specifically includes the data that shall be transmitted from the data transmission unit to the emergency lighting device. The signal is demodulated to retrieve the transmitted data. The data is finally stored in a memory or directly supplied to further modules or components for further processing.

Advantageously, the emergency lighting device is configured to automatically switch the operation of its indicator LED to the reverse operation mode in response to determining mains shut off by the emergency lighting device.

It is further preferred that the emergency lighting device is switched to operate in a rest mode in response to detecting a predefined mains shut off pattern corresponding to a reference shut off pattern defined as a trigger condition and stored in the emergency lighting device. The sequence of shutting off mains and repowering the emergency lighting device can be used in order to trigger switching the emergency advice into the rest mode. Alternatively, switching the emergency lighting device into the rest mode can be performed in response to detecting a switch command received in the modulated light. In that case, after switching the emergency lighting device into the emergency mode and, thus, operating the indicator light in the reverse mode, the emergency lighting device is configured to monitor the signal produced by the indicator LED operating as a photodiode in response to the incident light. The respective commands that may be received in the incident modulated light can be stored in a memory of the emergency lighting device. After the indicator LED is switched to the reverse mode operation, commands, such as a switch command to switch over to the rest mode, can be transmitted from the data transmission device to the emergency lighting device.

Further advantageous aspects and features of the present invention will now be described with reference to the attached drawings in which
- Figure 1: shows an overview over the system according to the present invention and illustrates the principle of data transmission to an emergency lighting device,
- Figure 2: shows an alternative embodiment of the inventive system,
- Figure 3: shows a block diagram illustrating the major components of the data transmission device,
- Figure 4: shows circuitry of the emergency lighting device relevant for measurement of the modulated incident light and retrieving transmitted data in the emergency lighting device; and
- Figure 5,: shows a flowchart illustrating the main method steps according to the present invention.

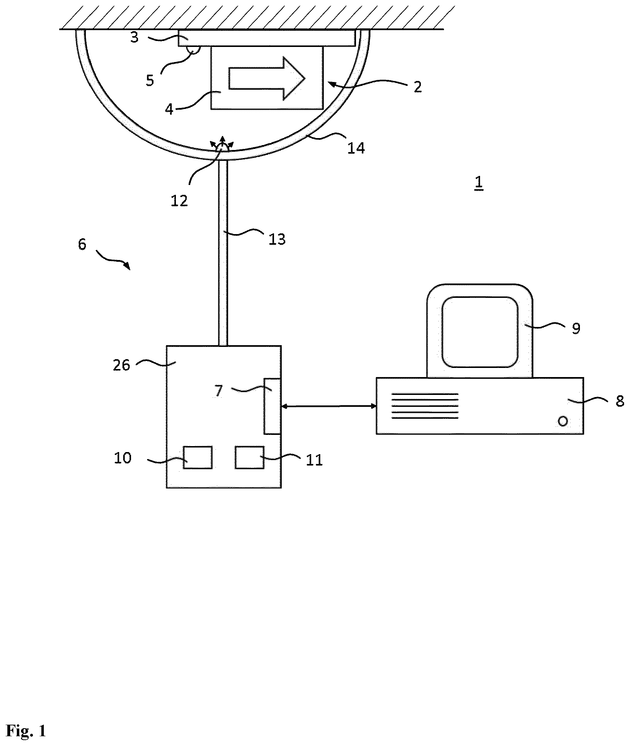

Figure 1 shows an overview over the present invention and illustrates all major components of the system 1 for transmitting data, for example, in order to update firmware of an emergency lighting device 2.

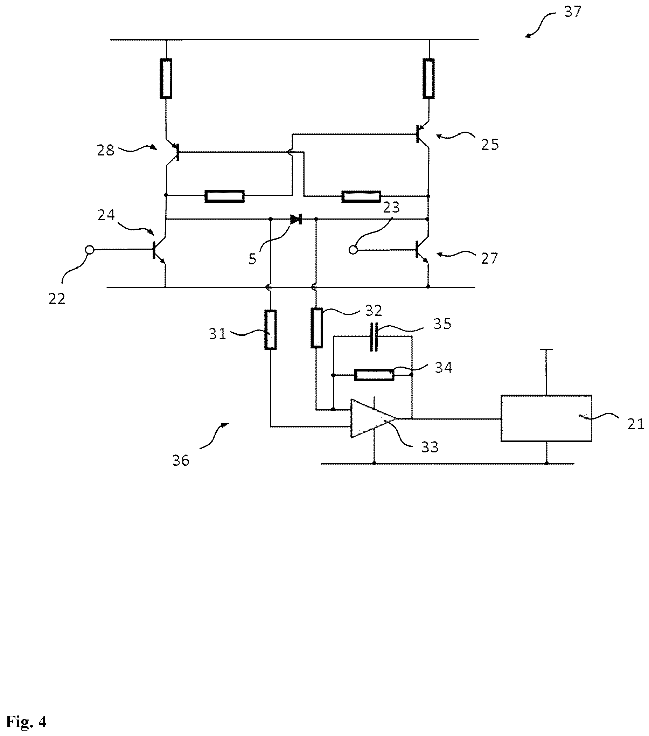

The basis for the inventive emergency lighting device 2 is a conventional and well-known emergency lighting device and, according to the invention, includes specific circuitry described hereinafter with reference to figure 4. The emergency lighting device 2 comprises a housing in which all electrical components to enable operation of the emergency lighting device 2 are included. The housing accommodates an power supply terminals for connecting the emergency lighting device 2 to mains, and circuitry for charging an energy storage, for example the rechargeable battery. These components and modules are commonly known in the art and, for conciseness of the description, detailed discussion thereof is omitted. Hereinafter is therefore only referred to the "emergency driver" 3 and specific functions will only be explained in greater detail as far as necessary for the understanding of the present invention.

The emergency lighting device 2 comprises an indicator LED 5, that is connected to the emergency driver 3 and is controlled for emitting light in case that the rechargeable battery of the emergency device 2 is charged. The indicator LED 5 is a green LED and light emission of the LED can be recognized from the outside of the emergency lighting device 2. For example, the LED 5 may be positioned on the outside of the housing of the emergency lighting device 2 or inside the housing but in a recess of the housing or a sufficiently thin part of the housing such that light emission of the indicator LED 5 is perceivable from the outside.

In the illustrated embodiment of the emergency lighting device 2, reference numeral 4 indicates an illuminated sign which can be illuminated in case of an emergency. The emergency driver 3 is configured to monitor mains and detect mains shut off. In case that mains shut off is detected, the emergency driver 3 concludes that a mains failure occurred, and automatically switches the emergency lighting device 2 into the emergency operation mode. In the emergency operation mode, the light source (not illustrated in the figure) of the emergency lighting device 2 is switched on and powered from the rechargeable battery included in the emergency lighting device 2.

According to the invention, additional circuitry included in the emergency driver 3 is provided and configured to switch the operation mode of the indicator LED 5 to a reverse mode to cause the indicator LED 5 to act as a photodiode. This is called switching the indicator LED 5 operation into the reverse mode. The circuitry included in the emergency driver 3 used for switching the indicator LED 5 into the reverse mode will be explained below with reference to figure 4 in greater detail. For a basic understanding of the present invention however, it is sufficient to understand, that the indicator LED 5 can be operated to act like a photodiode, which is sensitive to incident light,. This functionality is now used in order to transmit information to the emergency lighting device 2.

In order to transfer data from external to the emergency lighting device 2 (upload data into the emergency lighting device 2), light is modulated such that the modulated lights includes information corresponding to the data to be transmitted to the emergency lighting device 2. According to the present invention, this is done by a data transmission device 6. The data transmission device 6 comprises an interface 7 by which the data transmission device 6 can be connected to a computer 8 with a display 9, on which an operator can prepare the data intended for transmission to the emergency lighting device 2. It is to be noted that the main purpose of the present invention is to transfer data from the data transmission device 6 to the emergency lighting device 2 in order to enable updating a firmware running on the emergency lighting device 2 without the need of dedicated interfaces for data transfer on the emergency lighting device 2. However, any kind of data may be transferred from the data transmission device 6 to the emergency lighting device 2 and, according to an even more sophisticated version of the present invention, data may be downloaded from the emergency lighting device 2 to the data transmission device 6 in order to perform an analysis of the downloaded data, for example by the computer 8 that can be connected to the interface 7 to read out the data downloaded from the emergency lighting device 2. Thus, the present invention in a preferred embodiment may establish a bidirectional communication for data transmission, wherein switching from a transmitting mode to a receiving mode can be triggered by sending a respective command by the respective transmitting site at the time.

The data transmission device 6 is a handheld device comprising a main body 26, which can easily be carried by an operator instructed to update the firmware of a plurality of emergency lighting devices 2 in a building. The transmission device 6 provides on its main body 26 a start button 10 and an indicator light 11, for example, for indicating completion of the data transfer from the data transmission device 6 to the emergency lighting device 2. As mentioned above, a typical application of the present invention is updating the firmware of the emergency lighting device 2, which can be completed for example in about 30 seconds when the data transmission is performed with 100 kHz, which proved to be reasonable.

The indicator light 11 is controlled to emit light after the data transmission device 6 determined that the upload of the data to be transmitted to the emergency lighting device 2 is completed. This can be acknowledged by outputting a confirmation signal using visual light communication by the indicator LED 5. In order to recognize such acknowledgement or confirmation signal emitted by the indicator LED 5, the data transmission device 6 can be switched from the data transmission mode into a data receiving mode. The switchover from the transmission mode into the receiving mode of the data transmission device 6 can be automatically performed after the entire data that is intended to be transmitted to the emergency lighting device 2 is completely sent by the data transmission device 6.

The start button 10 can be used in order to trigger the start of data transmission from the data transmission device 6 to the emergency lighting device 2. It is for example possible, to start the upload of data to the emergency lighting device 2 after the indicator light 11 signals a successful handshake between the data transmission device 6 and the emergency lighting device 2. Such a handshake can be used in order to avoid unauthorized data transmission to the emergency lighting device 2. After successfully completing such a handshake, it can be indicated by using the indicator light 11 to the operator holding the data transmission device 6 that uploading the data to be transmitted to the emergency lighting device 2 can start. In response pressing the start button 10 by the operator, the upload is started automatically. Completion of the upload may then be indicated to the operator by the indicator light 11, again.

Before such an upload of data to the emergency lighting device 2 can be started, the data to be transmitted from the data transmission device 6 to the emergency lighting device 2 is stored in a memory (not illustrated) in the data transmission device 6 after receiving it via the interface 7 from the computer 8. Data transmission to the emergency lighting device 2 is performed using visible light communication. In the illustrated embodiment, a green LED 12 is arranged at an end of a rod 13 distal to the main body 26 of the data transmission device 6. In a simple embodiment, the rod 13 has a fixed length, but it is also possible to provide the rod 13 as a telescopic rod. The telescopic rod 13 allows adjustment of the length of the rod 13 and thus, the distance between the LED 12 and the main body 26 of the data transmission device 6

While one preferred embodiment arranges the green LED at the distal end of the rod 13, it is also possible to accommodate a light guide inside the rod 13 and arrange, as per light source producing the modulated light signal, an LED inside the main body of the data transmission device 6. At the distal end of the rod 13 only a light-emitting surface is then provided emitting the light produced by the LED 12.

Instead of only a single light source, or a single color LED, it is also possible to provide a plurality of light sources emitting light having a wavelength corresponding to the variety of wavelengths indicator LEDs of that might possibly be used in the emergency lighting devices 2. Thus, by selecting one of these light sources, it is possible to choose the LED with the wavelength most suitable to the sensitivity of the LED in the emergency lighting device 2 operated in reverse mode. Preferably, the LED 12 used for transmitting information by visible light communication is chosen in accordance with the indicator LED 5.

The rod 13 also supports a light shade 14, which, in the illustrated embodiment is formed like a cup, with its open side large enough to enclose the entire emergency lighting device 2. This version allows to avoid that ambient light not emitted by the emergency lighting device 2 itself or the LED 12 badly affects the data transmission from the data transmission device 6 to the emergency lighting device 2 by reducing the signal to noise ratio of the signal generated by the indicator LED 5 produced in reverse mode.

According to a preferred embodiment, the emergency lighting device 2 is switched into a rest mode in which light emission by the emergency lighting device 2 is suppressed. This means, that the light sources of the emergency lighting device 2, except for the indicator light 5 in case that data shall be transmitted from the emergency lighting device 2 to the data transmission device 6, are switched off. Switching off the light sources of the emergency lighting device 2 can be performed upon identifying a respective trigger condition by the emergency lighting device 2. One possibility to determine such a trigger condition is to monitor mains after a first mains shut off is detected. This allows to recognize a sequence of mains being shut off and the emergency lighting device 2 being re-powered in order to compare this pattern of mains shut off with a reference pattern that is stored in the emergency lighting device 2. When the detected pattern of the mains shut off sequence corresponds to the stored reference pattern, the emergency lighting device 2 will switch to the rest mode and switch off any light source, except for the indicator LED 5 in case that data transmission from the emergency lighting device 2 to the data transmission device 6 is performed.

Alternatively, the incident modulated light received by the indicator LED 5 operated as a photodiode is searched for a command that is sent from the data transmission device 6 in order to instruct the emergency lighting device 2 to switch to the rest note.

The emergency lighting device 2 will switch the indicator LED 5 to be operated in the reverse mode after detecting mains shut off.

The cup-shaped light shade 14 is formed to ensure that its open side surrounds the emergency lighting device 2 such that it abuts the ceiling or wall to which the emergency lighting device 2 is mounted and produces a closed space with the ceiling (or wall) to which the emergency lighting device 2 is mounted. This avoids that ambient light is recognized by the indicator LED 5 when operated in the reverse mode.

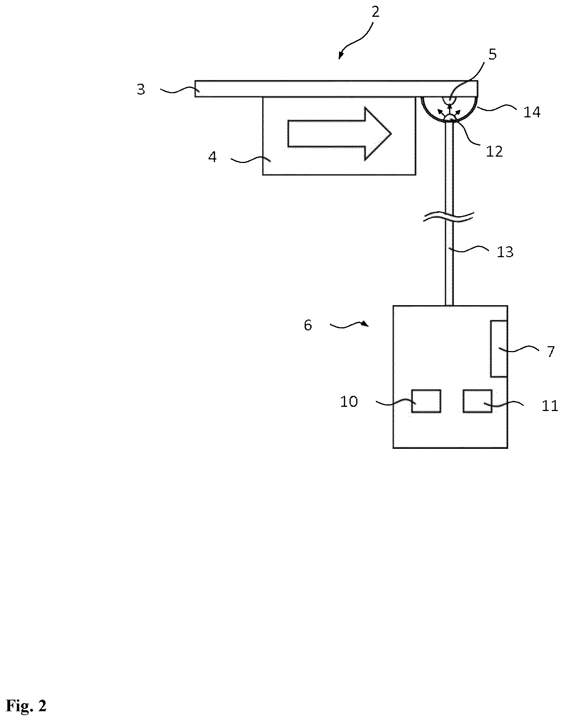

Figure 2 illustrates a further embodiment, in which, contrary to the solution shown in figure 1, the cup-shaped light shade 14 is smaller and does not enclosed the entire emergency lighting device 2 but only its indicator LED 5. While in the embodiment as shown in figure 2, it is easy to enclose the indicator LED 5, because it is arranged on a flat surface of the driver 3, it is evident that the light shade 14 might even have an adapted geometry corresponding to a specific housing geometry of the emergency lighting device 2 in order to ensure that ambient light is shaded.

Apart from the different size and structure of the light shade 14, the data transmission device 6 shown in figures 1 and 2 correspond to each other. In both cases, it is also possible to pivotally support the light shade 14 at the distal end of the rod 13 in order to allow for easily enclosing the closed space to enclose the lighting device 2 or the indicator light 5 only, even in a situation, in which the operator holding the data transmission device 6 cannot easily to position the rod 13 perpendicular to the mounting surface on which the emergency lighting device 2 is mounted.

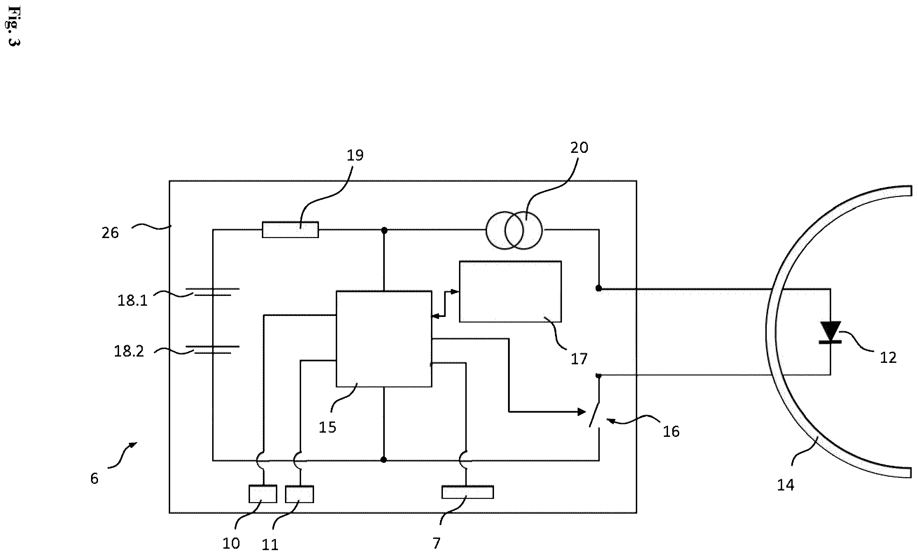

The main structure of the data transmission device 6 is shown in figure 3. The main body 26 of the data transmission device 6 encloses a microcontroller 15 that is connected to the start button 10, the indicator light 11 and the interface 7. Additionally, the data transmission device 6 comprises a battery, indicated by the units 18.1 and 18.2 providing a DC voltage to a low voltage power supply 19. The low voltage power supply 19 provides the microcontroller 15 with electrical energy but also a current source 20, which is providing a current to the LED 12.

The LED 12 is switched on and off by means of a switch 16, that is controlled by the microcontroller 15. The microcontroller 15 is further connected to a memory 17 storing the data to be transmitted from the data transmission device 6 to the emergency lighting device 2. The data is stored in the memory 17 when it is received via the interface 7. The microprocessor 15 creates, based on the data to be transmitted which is stored in the memory 17, a drive signal that causes opening and closing the switch 16 thereby modulating the light emitted by the LED 12 in order to transmit the data to be transmitted.

While the main purpose is transmission of data required for updating firmware or adjusting parameters in the emergency lighting device 2, any other information that needs to be transmitted to the emergency lighting device 2 may be transmitted using visible light communication between the data transmission device 6 and the emergency lighting device 2. For example, the command instructing the emergency lighting device 2 to switch into the rest mode may also be encoded by using the switch 16 in response to a respective signal generated by the microcontroller 15.

The simplified block diagram illustrated in figure 3 is limited to illustrating the operation of the LED 12 by the data transmission device 6 in the light-emitting mode. As indicated above, it is, also possible to operate the LED 12 in a reverse mode in order to enable data transmission from the emergency lighting device 2 to the data transmission device 6. In order to avoid repetitive explanations of such a reverse mode of an LED, it is referred to the explanations that will be provided below explaining the reverse operation mode of the indicator LED 5 of the emergency lighting device 2.

When the LED 12 is operated in the reverse mode, the data retrieved from the received modulated light signal can be stored in the memory 17 for later read out by a computer 8 connected to the interface 7. It is to be noted that the interface 7 may be a USB interface, ethernet or any other suitable communication interface, wired or wireless.

Figure 4 illustrates the circuitry, which is, compared to a known low-budget emergency lighting device driver 3, adapted in order to enable data transmission between a data transmission device 6 and the emergency lighting device 2.

As can be seen in figure 4, the indicator LED 5 is operated using a bridge arrangement 37. The bridge arrangement 37 is controlled by a microprocessor 21 arranged in the driver 3 and having outputs connected to the terminal 22 and 23.

Terminal 23 is connected to a first transistor 27, and upon switching the first transistor 27 into its conducting state, a second transistor 28 will also be switched into its conducting state. When the first transistor 27 and the second transistor 28 are in their respective conducting states, the indicator LED 5 is operated in its light emitting mode. Thus, by setting the terminal 23 high by the microprocessor 21, the indicator LED 5 is switched on, and the emergency lighting device 2, to be more precise the driver 3, can control the operation of the indicator LED 5 in a conventional manner.

The bridge arrangement 37 shown in figure 4, however, provides a further operation mode for the indicator LED 5: in case that the microprocessor 21, which has one further output connected to the second terminal 22 sets the second terminal 22 to high and the first terminal 23 to low, a third transistor 24 is switched into its conducting state, and, as a consequence thereof, a fourth transistor 25 is also brought into its conducting state. This switches the operation of the indicator LED 5 into the reverse mode, in which no light is emitted by the LED 5 but the indicator LED 5 is operated as a photodiode sensitive to incident light.

When the indicator LED 5 is operated as a photodiode, incident light induces a voltage over the indicator LED 5 that can be measured by a measurement circuit 36 included in the driver 3 of the inventive emergency lighting device 2.

The measurement circuitry 36 comprises as one main component a differential amplifier 33. The inputs of the differential amplifier 33 are connected to each side of the indicator LED 5, respectively. In the connecting lines of the inputs of the differential amplifier 33, resistors 31 and 32 are arranged. Using the differential amplifier 33, it is possible amplify the small voltage signal that is provided by the indicator LED 5 operated in the reverse mode (as a photodiode). The differential amplifier 33 allows to detect the incident modulated light falling on the indicator LED 5. In parallel to the differential amplifier 33, a further resistor 34 and the capacitor 35 are provided. For further processing the signal output by the differential amplifier 33, the output of the differential amplifier 33 is connected to the microcontroller 21.

Once the signal output by the differential amplifier 33 is received by the microcontroller 21, the original data transmitted from the data transmission device 6 to the emergency lighting device 2 can be retrieved by modulating the signal output by the differential operator 33. The data retrieved from the signal output of the differential amplifier 33 can then be stored in a memory (not illustrated) before it is further used. In case that a new firmware shall be installed in the emergency driver 3, it is thus possible to collect and store the entire data that is transmitted from the data transmission device 6 in the memory and check for data corruption or incomplete data transmission. In order to check correct reception of the data transmitted from the data transmission device 6 to the emergency lighting device 2, a checksum may be used or other technology well known in the art. It is preferred that the memory, in which the retrieve data is stored is a separate memory, independent from a memory used for operating and storing currently used firmware in the emergency lighting device. Only in case that the integrity of the data and correct submission from the data transmission device 6 to the emergency device 2 can be acknowledged, the data will be used to update the main memory and install the new firmware.

Alternatively, the data provided by the output of the differential amplifier 33 may be directly used for further processing by the microcontroller 21 for other components, not illustrated in the figures.

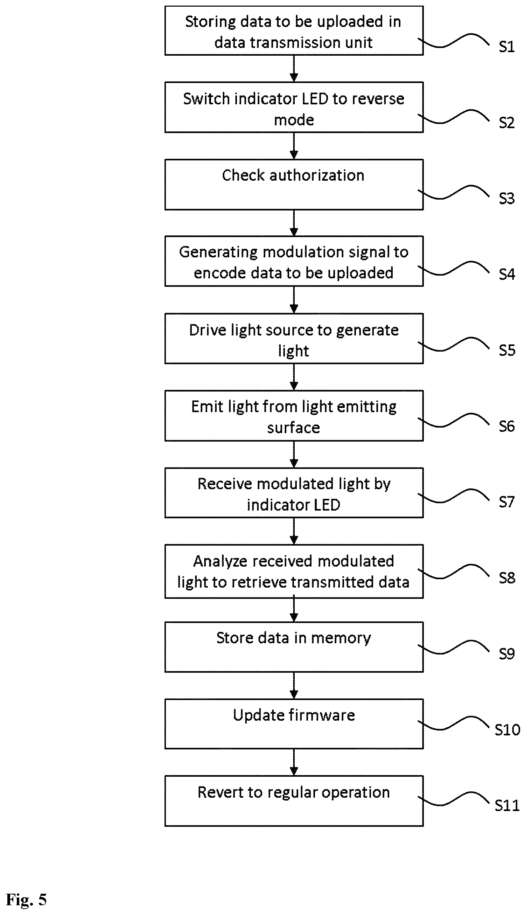

The inventive method will now be described with reference to figure 5 to summarize the entire procedure as explained already with reference to the individual components of the data transmission device 6 for the emergency lighting device 2 illustrated in figures 1 to 4.

Before the data transmission from the data transmission device 6 to the emergency lighting device 2 can start, data is stored in the data transmission device 6 (S1), for example, in the memory 17. The cup-shaped light shade 14 is then positioned by the operator such that at least the indicator LED 5 is enclosed by the light shade 14. The emergency lighting device 2 switches the operation of the indicator LED 5 from its regular mode, which is the light emitting mode, to the reverse mode in which the indicator LED 5 is operated as a photodiode in step S2. The trigger event for the switching is detection of mains shut off, which is observed by the emergency lighting device 2 permanently.

When the indicator LED 5 is switched into the reverse mode operation, the authorization for uploading data into the emergency lighting device 2 is checked in step S3. The authorisation can be checked as explained above by using a handshake, for example, or uploading an identification code from the data transmission device 6 to the emergency lighting device 2 which is compared to stored reference ID.

In the data transmission device 6, based on the data to be transmitted stored in the memory 17, a modulation signal is generated which is used to encode the data to be uploaded in the emitted light. This modulation signal basically is a control signal for switching the switch 16 into its conducting or non-conducting state. Thus, the modulation signal may be a drive signal controlling a transistor arranged in series to the LED 12 in the circuit providing the LED 12 with a current.

Accordingly, the LED 12 as the light source of the data transmission device 6 is driven to generate modulated light in step S5, which is finally emitted from the light emitting surface in step S6

The modulated light is then received by the indicator LED 5 of the emergency lighting device 2 in step S7 causing a measurable induced voltage over the indicator LED 5 operated as photodiode. This output voltage difference is then analyzed in order to retrieve the originally transmitted data in step S8.

The retrieved data is preferably stored in the separate memory in the emergency lighting device 2. This separate memory advantageously is independent from the main memory of the emergency lighting device in which actual data, parameters and software for operating the emergency lighting device 2 are stored.

Based on the data stored in such additional memory, a check of the completeness and integrity of the transmitted data can be performed before, in step S 10, the firmware for the microcontroller 21 of the emergency driver 3 is updated. When the update of the firmware is completed, the emergency lighting device 2 may revert to its regular operation in step S 11.

It is to be noted that the flowchart depicted in figure 5 only refers to uploading data from the data transmission device 6 to the emergency lighting device 2. However, as indicated above already, it is also possible to download data from the emergency lighting device 2 for off-line processing and/or analysis of the data, for example, in order to perform an error analysis. This can be achieved by operating the data transmission device 6 in a receive mode and, at the same time, the emergency lighting device using the indicator LED 5 in a transmit mode. The exchange of roles immediately shows that the respective circuitry explained for the data transmission device 6 or the circuitry explained with reference to figure 4 shall then also be included in the respective other system, namely the emergency lighting device 2 or the data transmission device 6. Since it is possible to transmit information from the data transmission device 6 to the emergency lighting device 2 apart from uploading data for a firmware update, the data transmission device 6 can trigger the change of roles by sending such switch command to the emergency lighting device 2. After changing the rules for the first time, it is the light emitting device 2 that may trigger to switch back to the normal roles.

## Claims

1. Data transmission device for transmitting data by emitting modulated light comprising a light source (12) producing modulated light for data transmission, the light source (12) being connected to a light emitting surface, a main body (26) comprising a microcontroller (15) configured to cause the light source (12) to produce the modulated light according to data to be transmitted, wherein a rod (13) is attached to the main body (26) and the rod (13) supports at least the light emitting surface at an end distal to the main body (26).

2. Data transmission device according to claim 1, wherein the rod (13) supports a light shade (14) surrounding the light emitting surface partially.

3. Data transmission device according to claim 1 or 2, wherein the light source (12) provides the light emitting surface and is arranged on the distal end of the rod (13).

4. Data transmission device according to any of claims 1 to 3, wherein the rod (13) is a telescopic rod.

5. Data transmission device according to any of claims 1 to 4, wherein the microcontroller (15) is configured to convert the data to be transmitted into a drive signal, and the microcontroller (15) is connected to a switch for controlling the switch (16) to cause the light source (12) to produce the modulated light based on the drive signal.

6. Data transmission device according to any of claims 1 to 5, wherein the light source (12) is an LED and data transmission device (6) is configured to operate the LED in a light emitting mode for transmitting data and in a reverse mode to receiving data.

7. Emergency device comprising an indicator LED (5), a microcontroller (21) controlling operation of the indicator LED (5), circuitry (37) allowing to switch operation of the indicator LED (5) from a light emitting mode to a reverse operation mode, measurement circuitry (36) for measuring incident light in the reverse operation mode to generate a received signal, wherein the microcontroller (21) is configured to demodulate the received signal for retrieving transmitted data, and to supply the transmitted data to a memory or a further data processing unit.

8. The emergency device according to claim 7, wherein the emergency device is a self contained emergency lighting device (2).

9. The emergency device according to claim 7 or 8, wherein the microcontroller (21) is configured to cause operation of the indicator LED (5) in the reverse mode in response to detecting mains shut off.

10. The emergency device according to any of claims 7 to 9, wherein the microcontroller (21) is configured to compare a mains shut off pattern to a reference shut off pattern defined as a trigger condition.

11. The emergency device according to any of claims 7 to 9, wherein the microcontroller (21) is configured to switch the emergency device (2) into a rest mode in response to the trigger condition being fulfilled or in response to detecting a trigger command received in the modulated light after detecting mains shut off.

12. System for transferring data to an emergency device (2) comprising the data transmission device (6) according to any of the claims 1 to 6 and the emergency device (2) according to any one of the claims 7 to 11.

13. Method for transferring data from a data transmission device (6) according to any of claims 1 to 6 to an emergency device (2) according to any one of claims 7 to 11, comprising the following steps:
- switching the emergency device's indicator LED (5) operation mode into the reverse operation mode (S2),
- causing the light source (12) to produce modulated light according to data to be transmitted (S4, S5), and emitting the modulated light by the light emitting surface (S6),
- Receiving and measuring incident light received by the indicator LED (5) operated in the reverse mode (S7),
- demodulate the measured incident light to retrieve the transmitted data (S8), and
- store the transmitted data in a memory (S9) or supply it for further data processing.

14. Method according to claim 13, further switching the operation of the indicator LED (5) in the reverse operation mode in response to determining mains shut off.

15. Method according to claim 13 or 14, further switching the emergency device (2) in a rest mode in response to detecting a mains shut off pattern corresponding to a reference shut off pattern defined as a trigger condition or in response to detecting a trigger command received in the modulated light.
